# FASCICULE DE BREVET EUROPEEN

(11) **EP 2 169 569 B1**
(45) Date de publication et mention de la délivrance du brevet: **26.03.2014**
(21) Numéro de dépôt: 09171334.7
(22) Date de dépôt: 25.09.2009
(51) Int. Cl.: G06F 17/30

(54) **Procédé et système de communication entre applications web distinctes**
Verfahren und System zur Kommunikation zwischen verschiedenen Web-Anwendungen
Method and system for communication between distinct web applications

(30) Priorité: 30.09.2008 FR 0856592
(43) Date de publication de la demande: 31.03.2010
(73) Titulaire: Orange, 75015 Paris (FR)
(72) Inventeur: Bertin, Emmanuel, 14530, LUC-SUR-MER (FR); Laga, Nassim, 14000, CAEN (FR); Deschrevel, Jean-Pierre, 14740, PUTOT-EN-BESSIN (FR)

(56) Documents cités:
- US-A1- 2006 004 913
- SONG J ET AL: "An HTML fragments based approach for portlet interoperability" PROCEEDINGS OF THE 7TH INTERNATIONAL CONFERENCE ON DISTRIBUTED APPLICATIONS AND INTEROPERABLE SYSTEMS, [Online] 6 juin 2007 (2007-06-06), - 8 juin 2007 (2007-06-08) pages 195-209, XP002528766 Paphos, Chypre Extrait de l'Internet: URL:http://www.springerlink.com/content/jt 6l6u7394h56m18/fulltext.pdf> [extrait le 2009-05-19]
- WEINREICH R ET AL: "A Component Model for Integrating Remote Applications and Services via Web Portals" JOURNAL OF OBJECT TECHNOLOGY, [Online] vol. 6, no. 8, septembre 2007 (2007-09), pages 67-94, XP002528767 Zurich, Suisse Extrait de l'Internet: URL:http://www.jot.fm/issues/issue_2007_09 /article1.pdf> [extrait le 2009-05-19]

## Description

La présente invention concerne un procédé permettant de faire dialoguer des applications Web distinctes, exécutées chacune depuis un terminal serveur et affichées simultanément dans une même page de présentation, par exemple une page HTML présentée sur un terminal d'ordinateur au moyen d'un navigateur Web.

L'invention permet ainsi à des applications Web distinctes d'exécuter certaines opérations en réaction à des services mis en oeuvre par une autre application avec laquelle elles cohabitent au niveau de l'affichage, à l'intérieur d'une même page Web développée d'une façon modulaire à partir d'une pluralité de modules distincts et indépendants plus communément appelés "portlets", "widgets" ou "gadgets".

De tels modules ou portlets, aptes à servir de conteneur dans une page Web pour l'exécution et/ou l'affichage d'applications Web, sont notamment utilisés dans des développements de services ou d'applications du type Web 2.0, par exemple en s'appuyant sur les techniques AJAX (pour "Asynchronous JavaScript And XML" - ou " XML et Javascript asynchrones ").

A titre informatif, AJAX désigne une méthode informatique de développement d'applications Web. Il ne s'agit aucunement d'une technologie en elle-même, mais simplement d'un terme qui évoque l'utilisation conjointe d'un ensemble de technologies couramment utilisées sur le web, à savoir notamment :
■ le langage HTML (pour "HyperText Markup Language"), ou le langage XHTML (pour "Extensible HyperText Markup Language") pour ce qui concerne la définition de la structure sémantique des informations contenues dans une page web ;
■ le modèle DOM (pour "Document Object Model" en anglais "Modèle objet de document" en français), et JavaScript pour afficher et interagir dynamiquement avec l'information présentée. DOM est une recommandation du W3C qui permet notamment de décrire une interface indépendante de tout langage de programmation et de toute plate-forme et qui permet à des programmes informatiques et à des scripts d'accéder ou de mettre à jour le contenu, la structure ou le style de documents ;
■ le langage JavaScript (marque déposée), dont l'objet XMLHttpRequest qui caractérise le coté asynchrone d'Ajax, notamment et non exclusivement, pour ce
   qui concerne l'échange et la manipulation, des données avec un serveur Web. Cet objet permet notamment d'obtenir des données au format XML, mais aussi au format HTML, ou plus simplement encore au format texte, par l'invocation de simples requêtes de type HTTP (pour "Hypertext Transfer Protocol" en anglais, ou "protocole de transfert hypertexte" - protocole de communication client-serveur développé pour le World Wide Web).

Or, si de telles portlets permettent de faire cohabiter plusieurs composants applicatifs (encore appelés dans la suite et pour raison de simplification, applications) au sein d'une même page Web, et ceci de façon personnalisable (en termes de graphisme, d'agencement, etc.), elles présentent cependant pour principal inconvénient de ne pas permettre une connexion et/ou une interopérabilité entre plusieurs applications Web hébergées chacune par une portlet d'une même page Web, de sorte qu'il n'est pas possible, par exemple, de faire réagir dynamiquement une première application à l'exécution d'un service mis en oeuvre par une deuxième application (ou "portlets").

Par service, le lecteur comprendra toute fonction applicative susceptible de générer en sortie au moins une valeur de paramètre (une valeur d'évènement ou de données, par exemple et de façon non limitative), une telle valeur de paramètre étant susceptible de servir de paramètre d'entrée pour l'exécution d'une opération (un autre service, un processus, etc.) mise en oeuvre et exécutée par une autre application hébergée dans une même page web (par exemple, une page d'un portail web).

Le document : "An HTML fragments based approach for portlets interoperability" de Song J. et al., Proceedings of the 7th International Conference on Distributed Applications and Interoperable Systems, 6-8 juin 2007, Paphos, Chypre, pages 195-209, décrit une technique pour faire fonctionner entre elles des *portlets* selon une approche basée sur l'utilisation de blocs d'éléments HTML (*fragments*) générés par les *portlets.*

La présente invention offre une solution différente de celle décrite dans le document susmentionné et qui ne présente pas les inconvénients précités en proposant un procédé qui soit apte au contraire à permettre la communication dynamique d'informations entre applications distinctes hébergées dans une même page Web, ainsi qu'une interopérabilité dynamique entre ces applications souvent hétérogènes et développées indépendamment les unes des autres, et ce, sans aucune action nécessaire de la part de l'utilisateur.

A cet effet, l'invention concerne un procédé de communication entre une première application et au moins une deuxième application accessibles à l'intérieur d'une même page d'un navigateur Internet.

Selon l'invention, un tel procédé comprend :
■ une étape de transmission préalable par une deuxième application à une entité de gestion d'applications, d'une première liste associant à chaque service proposé par ladite deuxième application, au moins un type de paramètre dont une valeur sera générée à l'exécution du service ;
■ une étape de souscription dynamique de ladite première application à au moins un service de ladite deuxième application, incluant la transmission par ladite première application à ladite entité de gestion d'applications, du type de paramètres susceptibles de servir de paramètres d'entrée pour l'exécution d'au moins une opération susceptible d'être exécutée par ladite première application ;
■ une étape d'exécution par ladite première application, d'au moins une opération tenant compte d'une valeur d'au moins un paramètre, générée par l'exécution dudit au moins un service et transmise par ladite deuxième application à ladite première application, incluant la vérification que le type dudit au moins un paramètre d'entrée de ladite opération correspond au type dudit au moins un paramètre dont la valeur a été générée par l'exécution dudit au moins un service.

Un tel procédé permet donc avantageusement de favoriser l'interopérabilité dynamique et la communication/ l'échange d'informations entre applications Web (portlets) hébergées respectivement dans une même page Web, par exemple une page HTML et ainsi, d'améliorer la performance du service offert à l'usager.

Elle offre en outre à l'utilisateur des possibilités de manipulation et d'interaction avec les services proposés par chacune des applications auxquelles il peut accéder dans une même page web d'un navigateur, beaucoup plus intuitive.

En effet, de part la mise en oeuvre d'un mécanisme de souscription d'une première application à au moins un service offert par au moins une autre application hébergées toutes deux dans une même page Web, il devient possible de créer un lien de communication entre au moins certaines applications d'une même page Web. Grâce à ce lien de communication, ces applications vont pouvoir "se connaître" et ainsi interopérer, au bénéfice de l'utilisateur.

Dans un mode de réalisation préféré de l'invention, la valeur du paramètre générée par l'exécution dudit service de la deuxième application sera représentative d'un évènement ou d'une donnée susceptible de servir de paramètre d'entrée pour l'exécution de ladite opération.

La solution proposée permet aux modules de :
- connaître en temps réel les différentes applications chargées par l'utilisateur. Ceci leur donne la possibilité de cibler les portlets vers lesquelles les paramètres (par exemple des évènements et/ou des données) sont publiés (i.e. une portlet A peut déclencher la portlet B pour effectuer une tache spécifique). Cela présente un double avantage, un premier en termes de sécurité - les applications savent quelles autres applications sont à même d'exploiter les données ou évènements qu'elles génèrent ; un second en termes d'automatisation des communications entre applications d'une même page Web, ce qui enrichit les fonctionnalités offertes à un utilisateur de part cette possibilité d'interopérabilité entre les applications d'une même page Web ;
- souscrire au(x) service(s) proposé(s) par une autre application, par exemple soit à des évènements de type prédéterminé (e.g. un évènement de type "appel entrant"), soit à des données de type prédéterminé (e.g. une donnée de type "contact") ;

En particulier, une fois réalisée l'étape de souscription de la première application à au moins un service d'au moins une deuxième application, ladite première application sera apte à déclencher automatiquement l'exécution d'une opération prédéterminée qui tiendra compte d'une valeur d'au moins une donnée mise à jour par l'exécution dudit au moins un service fourni par ladite deuxième application.

Cette valeur de donnée de type prédéterminée générée par un service de la deuxième application sera en effet communiquée dynamiquement par cette dernière à la première application ayant préalablement souscrit au service, avant d'être prise en compte par cette dernière qui déclenchera l'exécution d'une opération spécifique en tenant compte de cette valeur comme paramètre d'entrée.

Le transfert d'informations entre applications Web hébergées dans une même page Web s'effectue alors directement et dynamiquement entre ces dernières, dès lors qu'elles ont souscrites respectivement au(x) service(s) (évènements et/ou données générés) d'au moins une autre application.

Ainsi, un autre avantage de cette approche selon l'invention, provient du fait qu'elle n'implique pas que l'utilisateur connaisse à l'avance l'opération à réaliser entre ladite première portlet et ladite deuxième portlet, ce qui favorise la simplicité d'usage et le caractère intuitif de l'utilisation des différents services qui lui sont proposés.

De plus, il est possible d'imaginer aisément, dans une variante de mise en oeuvre du procédé précité, que les applications puissent souscrire également à des services mis en oeuvre par tout autre module (visible ou invisible pour l'utilisateur) qui serait hébergé à l'intérieur de la page Web et qui serait susceptible de générer ou produire une valeur de paramètre qui sera ensuite utilisée pour l'exécution de ladite opération exécutée par la première application. On peut par exemple imaginer qu'indépendamment des applications hébergées dans la page Web, une information dynamique contenue dans la page Web soit mise à jour et que celle-ci puisse être communiquée par un module de gestion de cette information dynamique (également hébergé dans la page Web) à une des applications qui utilisera cette information comme paramètre d'entrée d'une opération à exécuter.

Comme indiqué plus haut, un tel procédé de communication comprend une étape de transmission préalable par la deuxième application à une entité de gestion d'applications, d'une première liste associant à chaque service proposé par la deuxième application, au moins un paramètre de type prédéterminé dont une valeur sera générée à l'exécution dudit service.

Une telle caractéristique permet ainsi de répertorier auprès d'une entité tierce en charge de la communication entre applications distinctes hébergées dans une page Web d'un navigateur Internet, l'ensemble des types de paramètres (données ou évènements) pouvant être générés en sortie d'un service applicatif mis en oeuvre et exécuté au sein de la deuxième application.

Préférentiellement, ladite étape de souscription comprend avantageusement les sous-étapes suivantes de :
■ enregistrement de ladite première application auprès d'une entité de gestion d'applications ;
■ transmission par ladite première application à ladite entité de gestion d'applications, d'une deuxième liste de types de paramètres (données ou évènements) associés, respectivement, à au moins une opération susceptible d'être exécutée par ladite première application;
■ création par ladite entité de gestion d'une troisième liste de souscription de service, durant laquelle on associe à chaque service de ladite première liste au moins une opération susceptible d'être exécutée par ladite première application, par mise en correspondance des types de paramètres contenus respectivement dans lesdites premières et deuxièmes listes.

Cette étape du procédé de communication selon l'invention est particulièrement importante en ce qu'elle permet une mise en correspondance, au niveau de l'entité de gestion, de chaque service de ladite première liste avec au moins une opération susceptible d'être exécutée par ladite première application. La mise en correspondance s'effectue entre les types de paramètres (données ou évènements) répertoriés respectivement dans lesdites premières et deuxièmes listes. Une telle liste, laquelle se met à jour de manière dynamique en fonction des connexions/ déconnexions d'applications dans la page Web et en fonction des souscriptions/ dé souscriptions à des services, permet de créer un lien de communication entre les différentes applications hébergées et exécutées dans une même page Web, sans que ces dernières n'aient eu préalablement à se connaître et sans que ces dernières n'aient été développées spécifiquement pour pouvoir interagir et/ou interopérer entre les unes avec les autres, ce qui constitue un avantage certain propre à la présente invention.

Avantageusement, cette troisième liste sert de base au déclenchement d'une opération (service ou processus, etc.) exécutée par la première application, sur la base de la génération d'une valeur de donnée et/ou d'évènement par un service de la deuxième application.

Pour une sécurisation accentuée des communications entre les première et deuxième applications qui ne se "connaissent" pas à la base, des critères de sélection et/ou de contrôle des paramètres échangés entre les première et deuxième applications pourront être vérifiés par l'entité de gestion, voir dans un mode de réalisation possible, par la première application, pour conditionner l'exécution de ladite opération à une vérification préalable desdits critères précités.

Dans un mode de réalisation avantageux de l'invention, un tel procédé comprend en outre une étape de création d'un lien de communication entre lesdites première et deuxième applications, ledit lien étant activé à partir de la deuxième application pour déclencher l'exécution de ladite opération au niveau de ladite première application, suite à l'exécution dudit service par ladite deuxième application.

Ce lien de communication entre les première et deuxième applications est maintenu actif par l'entité de gestion d'applications, de telle sorte que suite à la génération d'une nouvelle valeur de paramètre (donnée ou évènement) par un service de la deuxième application, une commande correspondante de déclenchement d'au moins une opération (un processus, un service, etc.) tenant compte de ladite nouvelle valeur, sera transmise à la première application. Une telle approche permet ainsi avantageusement de favoriser une interopérabilité entre applications hébergées dans des portlets distinctes d'une même page Web, alors même que celles-ci ont été développées indépendamment l'une de l'autre.

Dans un mode de réalisation possible du procédé, ledit lien de communication établi entre les première et deuxième applications est du type appel de fonction à distance tenant compte d'une valeur dudit paramètre généré à l'exécution du service de ladite deuxième application.

Une telle approche technique a pour avantage de facilité la mise en oeuvre du lien de communication entre les différentes applications d'une même page Web.

Il est bien entendu possible d'imaginer tout autre type de modalité de mise en oeuvre du lien de communication, par exemple en s'appuyant sur des fonctions de communication de type Flash (marque déposée) ou Java (marque déposée).

Dans un mode de réalisation préféré du procédé selon l'invention, ledit lien est matérialisé par un élément d'une interface homme machine propre à ladite deuxième application au moyen duquel un utilisateur de ladite deuxième application peut interagir pour déclencher l'exécution de ladite opération propre de ladite première application.

Ainsi, un utilisateur disposera en outre de la possibilité de déclencher lui-même l'exécution d'une opération propre de la première application, en interagissant avec un élément de l'interface homme-machine (IHM) propre de la deuxième application et représentatif de la première, ce qui tend à favoriser encore un peu plus le caractère intuitif de l'interopérabilité entre applications mis à la disposition de l'utilisateur.

Préférentiellement, à ladite étape d'exécution, on vérifie que le type dudit au moins un paramètre d'entrée de ladite opération correspond au type d'au moins paramètre généré à l'exécution d'un service souscrit par ladite première application auprès de ladite deuxième application.

Ceci permet un contrôle de type préalable à l'exécution d'une opération par la première application, suite à la génération d'une (ou plusieurs) valeur de donnée et/ou d'évènement, lors de l'exécution d'un service par la deuxième application.

Il est bien entendu possible d'envisager sans limitation aucune, toutes autres combinaisons des caractéristiques précitées propres du procédé de communication selon l'invention; de telles autres combinaisons entreront dans le champ de la protection demandée.

L'invention concerne aussi un système de communication entre une première application et au moins une deuxième application hébergées dans une page d'un navigateur Internet.

Selon l'invention, un tel système comprend avantageusement :
■ des moyens de transmission par une deuxième application, à une entité de gestion d'applications, d'une première liste associant à chaque service proposé par ladite deuxième application, au moins un type de paramètre dont une valeur sera générée à l'éxécution du service ;;
■ des moyens de souscription dynamique de ladite première application à au moins un service de ladite deuxième application, lesdits moyens des souscription incluant des moyens de transmission par ladite première application à ladite entité de gestion d'applications, du type de paramètres susceptibles de servir de paramètres d'entrée pour l'exécution d'au moins une opération susceptible d'être exécutée par ladite première application;
■ des moyens d'exécution par ladite première application, d'au moins une opération tenant compte d'une valeur d'au moins un paramètre (donnée ou évènement) générée par l'exécution dudit au moins un service et transmise par ladite deuxième application à ladite première application, et de vérification que le type dudit au moins un paramètre d'entrée de ladite opération correspond au type dudit au moins un paramètre dont la valeur a été générée par l'exécution dudit au moins un service.

L'invention concerne encore une entité de gestion d'au moins une première et deuxième application hébergées chacune dans une page d'un navigateur Internet.

Selon l'invention, une telle entité comprend :
■ des moyens de stockage d'une première liste associant à chaque service proposé par ladite deuxième application, au moins un type de paramètre dont une valeur sera générée à l'exécution dudit service, ladite première liste étant transmise à ladite entité par ladite deuxième application ;
■ des moyens de stockage d'une deuxième liste de paramètres associés, respectivement, à au moins une opération susceptible d'être exécutée par ladite première application, ladite deuxième liste étant transmise à ladite entité par ladite première application ;
■ des moyens de création d'une troisième liste de souscription de services, laquelle associe à chaque service de ladite première liste au moins une opération susceptible d'être exécutée par ladite première application, lesdits moyens de créations étant adaptés pour mettre en correspondance les types de paramètre contenus respectivement dans lesdites premières et deuxièmes listes.

Dans un mode de réalisation préféré de l'invention, ladite entité de gestion comprend en outre avantageusement :
■ des moyens de réception d'une valeur d'au moins un paramètre (donnée ou évènement) généré par l'exécution dudit au moins un service par ladite deuxième application; et
■ des moyens de transmission de ladite valeur à ladite première application, pour exécution dynamique de ladite au moins une opération tenant compte de ladite valeur.

Une telle entité permet donc d'assurer :
■ la gestion des souscriptions de services inter-applications ;
■ la gestion des communications entre applications ayant souscrits à leurs services, indépendamment et ou mutuellement.

L'invention concerne encore un produit programme d'ordinateur téléchargeable depuis un réseau de communication et/ou stocké sur un support d'information lisible par ordinateur et/ou exécutable par un microprocesseur, un tel produit programme d'ordinateur comprenant des instructions de code pour l'exécution d'un procédé de communication tel que décrit de façon détaillée ci-dessus, lorsqu'il est exécuté sur un ordinateur.

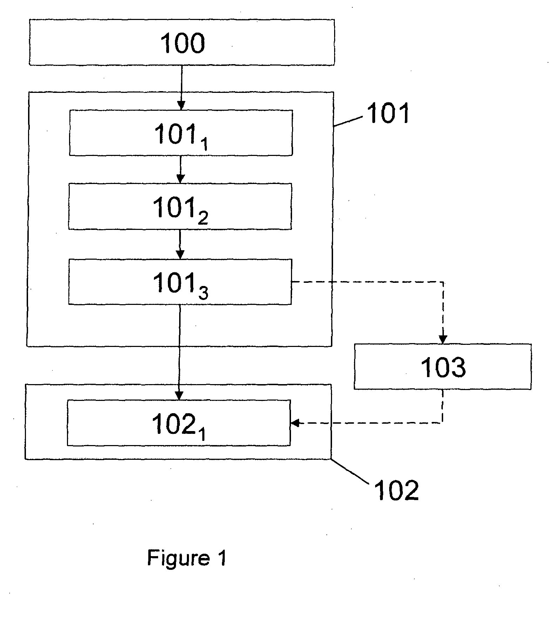

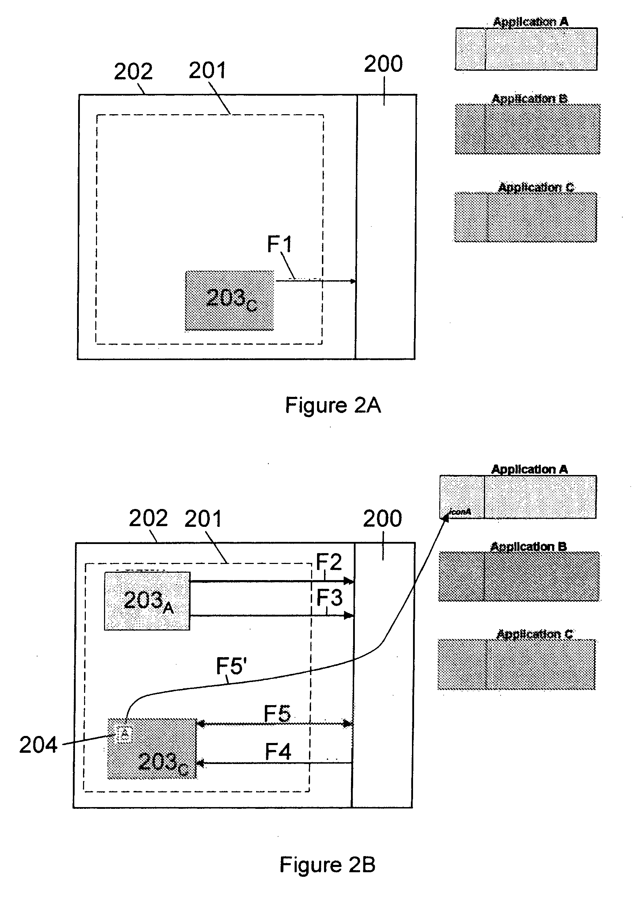

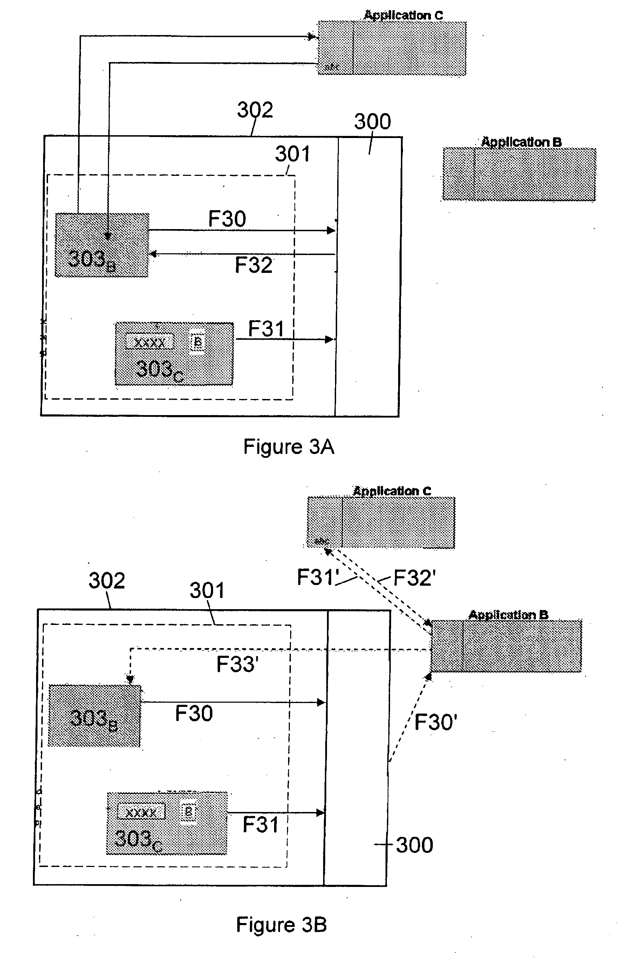

Les caractéristiques et avantages techniques de la présente invention ressortiront mieux de la description suivante, faite à titre indicatif et non limitatif, au regard des dessins annexés sur lesquels :
■ la figure 1 est ordinogramme résumant les grandes étapes du procédé de communication selon l'invention ;
■ les figures 2A à 2D décrivent le principe de la souscription d'applications hébergées dans une même page web d'un navigateur, au(x) service(s) (données et/ou évènements) proposés par au moins certaines d'entre elles ;
■ les figures 3A et 3B illustre le principe de communication entre applications d'une même page web, selon le procédé objet de l'invention.

La présente invention propose une solution favorisant la communication et l'échange d'information, et donc l'interopérabilité dynamique entre applications Web.

On décrit ci-après de façon détaillée, un mode de réalisation possible de l'invention.

Dans le cadre de la présente invention, une application hébergée dans une page Web possède un cycle de vie pouvant se résumer de la façon suivante :
- une première phase d'initialisation de ladite application essentiellement basée sur les trois étapes suivantes :
   o se faire connaître par les autres applications (encore dénommées portlets) hébergées dans la même page Web ;
   o souscrire aux services susceptibles de générer des valeurs de paramètres (évènement et/ou données) qui l'intéressent; et
   o connaître les souscriptions des autres applications (les données et évènements auxquels les autres applications peuvent réagir). Cette étape permet de gérer le contexte dans le sens ou chaque application connaît l'ensemble des services qui lui sont liés et qui sont chargés par l'utilisateur.
- une deuxième phase durant laquelle les différentes applications ayant souscrites aux différents services d'autres applications, peuvent communiquer entre elles selon un mode de publication/ réception d'évènements et/ou de données de type prédéterminé ;
- puis une troisième phase initiée lors de la déconnexion ou de l'interruption de l'exécution d'une application à l'intérieur de ladite page Web, de transmission aux autres applications hébergées dans la page Web, d'une information de déconnexion/ interruption, de façon que les applications restant actives dans la page Web puissent mettre à jour leurs informations relatives à des applications qui avaient préalablement souscrits à l'un au moins de leurs services (respectivement) et qui dont l'exécution dans la page Web a été depuis interrompue.

Ces différentes phases propres de l'invention sont détaillées ci-dessous dans la suite de la description.

On résume ici en relation avec la figure 1, les grandes étapes du procédé de communication entre applications exécutées respectivement dans des portlets hébergées chacune dans une même page web d'un navigateur.

Selon l'invention, un tel procédé de communication entre une première application et au moins une deuxième application accessibles à l'intérieur d'une page d'un navigateur Internet comprend :
■ une étape 101 de souscription dynamique de ladite première application à au moins un service de ladite au moins une deuxième application ;
■ une étape 102 d'exécution par ladite première application, d'au moins une opération 102₁ tenant compte d'une valeur d'au moins une donnée et/ d'évènement mise à jour par l'exécution dudit au moins un service et transmise par ladite deuxième application à ladite première application.

Un tel procédé selon l'invention comprend une étape 100 de transmission préalable par ladite deuxième application à une entité de gestion d'applications d'une première liste associant à chaque service proposé par ladite deuxième application au moins un paramètre (donnée et/ou d'évènement) prédéterminé dont une valeur sera générée à l'exécution dudit service.

Ladite étape 101 de souscription comprend les sous-étapes suivantes de :
■ enregistrement 101₁ de ladite première application auprès d'une entité de gestion d'applications ;
■ transmission 101₂ par ladite première application à ladite entité de gestion d'applications, d'une deuxième liste de types de paramètres (données ou évènements) associés, respectivement, à au moins une opération susceptible d'être exécutée par ladite première application;
■ création 101₃ par ladite entité de gestion d'une troisième liste de souscription de service, durant laquelle on associe à chaque service de ladite première liste au moins une opération susceptible d'être exécutée par ladite première application, par mise en correspondance des types de paramètres contenus respectivement dans lesdites premières et deuxièmes listes.

Dans un mode de réalisation avantageux de l'invention, le procédé comprend une étape 103 de création d'un lien de communication entre lesdites première et deuxième applications, ledit lien étant activé par ladite deuxième application pour déclencher l'exécution de ladite opération au niveau de ladite première application, suite à l'exécution dudit service par ladite deuxième application.

Dans un mode de réalisation possible de l'invention, à ladite étape d'exécution dynamique, on vérifie 102 que le type dudit au moins un paramètre d'entrée de ladite opération correspond au type d'au moins une donnée générée à l'exécution d'un service souscrit par ladite première application auprès de ladite deuxième application.

Comme illustré au travers les figures 2A à 2D, l'étape de souscription d'une application nouvellement activée/ exécuté à l'intérieur d'une page Web à un service d'au moins une autre application hébergée à l'intérieur de cette même page 201 Web d'un navigateur 202 s'effectue par l'intermédiaire d'une entité 200 de gestion d'applications.

Pour réduire l'investissement des utilisateurs dans le processus de communication entre applications, le mécanisme de souscription suivant est mis en oeuvre :
- quand une application souscrit à un évènement et/ou une donnée, ou plus généralement à un service d'une autre application, un service adapté pour générer au moins une donnée et/ou au moins un évènement de sortie, elle peut fournir une URL d'une icône qui est significative de l'opération qu'elle exécutera de façon dynamique (voire sur demande de l'utilisateur) en tenant compte comme paramètre d'entrée l'évènement et/ou la donnée générée ;
- les autres applications exécutées à l'intérieur de cette même page Web, ainsi que l'entité de gestion, seront alors en mesure de récupérer cette URL et de d'inclure cette icône dans leurs documents.

Dans l'exemple de la figure 2A, on considère trois applications A, B et C qui doivent être exécutées respectivement dans la même page 201 Web d'un navigateur 202.

Soit l'application C la première application, chronologiquement, exécutée dans la page 201 Web, au travers une portlet 203_{C}. Cette portlet 203_{C} va alors s'enregistrer (flèche F1, étape 100) auprès de l'entité 200 de gestion d'applications. Dans cet exemple et à titre illustratif, nous admettons que la l'application C, au travers sa portlet 203_{C} génère des évènements de type *eventType* avec des données de type *dataType.*

Ensuite, et comme illustré sur la figure 2B, une application A est exécutée dans une portlet 203_{A}, par le même utilisateur à l'intérieur de la page 201 Web du navigateur 202, ladite application A s'enregistrant (flèche F2, étape 101₁) alors auprès de l'entité 200 de gestion d'applications, en souscrivant à au moins un service d'au moins une autre application.
Lors de cette phase de souscription, l'application A fournit (flèche F3- étape 101₂) à l'entité 200 de gestion le type de données et/ou d'évènements qui l'intéresse, car étant susceptibles de servir de paramètres d'entrée pour l'exécution d'au moins une de ses opérations (services, processus, etc.). Elle fournit (flèche F3) également un lien (par exemple et de façon non limitative, une URL - pour "Uniform Ressource Locator") pointant vers l'opération qui devra être exécutée dynamiquement dès qu'une valeur de paramètre (donnée et/ou évènement) auxquels elle a souscrit sera générée.
Elle fournit encore (flèche F3) une URL d'une icône qui est significative par rapport à l'action à entreprendre correspondant à cette souscription. A ce stade, l'entité 200 détecte s'il y'a une association à créer entre les données/évènements générés par la portlet 203_{C} et les donnés/évènements susceptibles de servir de paramètres d'entrée pour l'exécution d'opérations de la portlet 203_{A} (étape 101₃).
A titre d'exemple dans la figure 2B, nous supposons que la portlet 203_{A} souscrit (flèche F3) aux données de type *dataType,* elle fournit donc l'URL de l'action *callBack,* et elle fournit aussi l'URL de l'icône *iconA@appA.*

Suite à l'étape de souscription de l'application A, l'entité 200 de gestion (encore dénommée "communication Manager" selon une terminologie anglophone) notifie (flèche F4) l'exécution de l'application A dans la portlet 203_{A} à l'application C, via la portlet 203_{C} de cette dernière.

L'application C se trouve alors informée qu'une nouvelle application (application A) est exécutée dans la même page 201 Web du navigateur 202. L'application C, via sa portlet 203_{C} peut récupérer (flèche F5) alors auprès de l'entité 200 de gestion d'applications une liste *L* des applications ayant souscrites respectivement aux données et/ou évènements (soit de façon plus générale, aux services) qu'elle génère, soit dans l'exemple précis, aux données du type *dataType* et aux évènements du type *eventType.*

La portlet 203_{C} dans laquelle s'exécute l'application C se rend compte que la portlet 203_{A} dans laquelle s'exécute l'application A peut réagir aux évènements qu'elle génère. Elle télécharge alors (flèche F5 également) l'icône 204 qui se trouve dans l'URL : *iconA@appA.* Cette URL, fournie par la portlet 203_{A} à l'étape décrite par la flèche F3 est récupérée (flèche F5) en même temps que la liste *L.*

Dans un mode de réalisation particulier, dit mode simplifié, c'est l'entité 200 de gestion d'applications qui télécharge l'icône 204 et qui crée dans la portlet 203_{C} tous les liens de communication à mettre en place. Pour cela, le développeur de la portlet 203_{C} aura indiqué la position à laquelle afficher cette icône par une balise html. Dans ce mode de réalisation, c'est donc l'entité 200 de gestion d'applications qui gère le cycle de vie du lien de communication matérialisé par l'icône 204 (suppression lorsque la portlet 203_{A} disparaît).

La portlet 203_{C} affiche alors dans une zone réservée de son interface homme machine (IHM) une icône représentative d'un lien de communication établi avec l'application A de la portlet 203_{A}, (étape 103) de sorte qu'une fois ce lien de communication établi, soit l'utilisateur peut cliquer (par exemple avec une souris ou bien un stylet) sur cette icône pour déclencher l'exécution d'une opération spécifique qui tiendra compte comme paramètre(s) d'entrée d'au moins une valeur de donnée et/ou d'évènement généré par l'application C et à laquelle l'application A aura préalablement souscrite, soit l'opération de l'application A sera déclenchée de façon dynamique dès lors que l'application C aura généré une valeur de donnée et/ou d'évènement à laquelle l'application A aura préalablement souscrite.
Ce dernier aspect propre à la communication entre applications est détaillé plus précisément dans la suite de la description en relation avec les figures 3A et 3B.

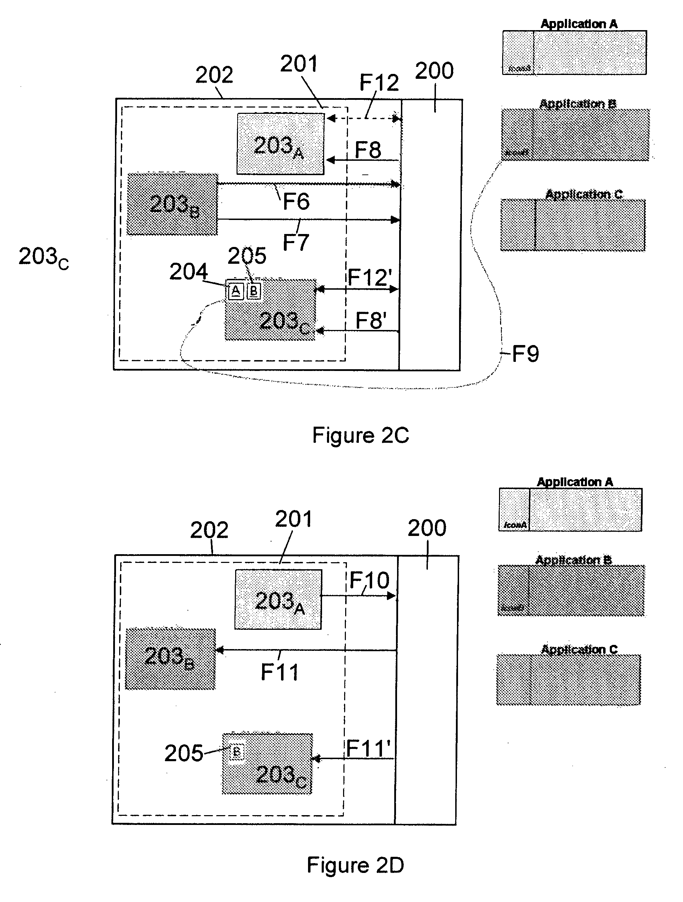

La figure 2C décrit les étapes suivantes de celles qui viennent d'êtres détaillées en relation avec la figure 2B.

Ainsi, on imagine en relation avec cette figure 2C, que l'utilisateur exécute une nouvelle application B, dans une portlet 203_{B} de la même page 201 Web du navigateur 202.
La portlet 203_{B} de l'application B s'enregistre (flèche F6) alors dynamiquement auprès de l'entité 200 de gestion d'applications. Et pour chaque souscription qu'elle fait, elle fournit également le type de données et/ou d'évènements qui l'intéresse, l'URL pointant vers l'opération qu'elle est susceptible d'exécuter en prenant pour paramètre d'entrée une valeur des données et/ou évènements auxquels elle a souscrit, et une URL d'une icône représentative de l'opération précitée.
Dans la suite de l'exemple de la figure 2C, la portlet 203_{B} souscrit (flèche F7) via l'entité 200 de gestion d'applications aux données de type *dataType,* elle fourni donc l'URL de l'action *callBack,* et elle fourni aussi l'URL de l'icône *iconB@appB.*

Une fois l'application B enregistrée auprès de l'entité 200 de gestion d'applications, cette dernière notifie (flèches F8 et F8') les applications A et C de l'activation de l'application B à l'intérieur de la page 201 web, via leurs portlets respectives 203_{A} et 203_{C}.

Les portlets 203_{A} et 203_{C} disposent désormais de l'information de présence de l'application B à l'intérieur de la page 201 Web, de sortes qu'elles vont alors récupérer chacune une liste *L* des souscriptions que l'application B aura sollicitée relativement aux données de type prédéterminé et aux évènements de type prédéterminé (ou plus généralement aux services) qu'elles sont susceptibles de générer - dans le cas de la portlet 203_{C} les évènements du type *eventType* et les données du type *dataType.*
Dans l'exemple de la figure 2C, l'application B ne souscrit à aucun service de l'application A, c'est-à-dire dans ce cas présent qu'aucune des données et/ou aucun des évènements généré(e)s en sortie d'un service rendu par l'application A n'est susceptible de servir de paramètre d'entrée d'une opération (service, processus, etc.) exécutée par l'application B.
La portlet 203_{C} se rend compte de façon dynamique que la portlet 203_{B} peut réagir aux évènements et/ou données qu'elle génère en sortie du ou des services qu'elle met en oeuvre, de sorte qu'elle va alors télécharger l'icône 205 représentatif de l'application B via l'URL : *iconB@appB* récupérée à l'étape représentée par la flèche F8'. Cette icône 205 fournie par la portlet B à l'étape représentée par la flèche F7 est alors affichée dans une zone prédéterminée de l'IHM proposée à l'utilisateur par la portlet 203_{C}, par exemple à côté de l'icône 204 représentative de l'application A. Ainsi, il suffira alors à l'utilisateur de cliquer sur l'icône représentative de l'application B contenue dans la portlet 203_{C} pour que l'application C transmette une donnée ou un évènement qu'elle aura préalablement générée à l'application B, via la portlet 203_{B}, de façon que l'application B puisse exécuter une opération prédéterminée (service, processus, etc.) en tenant compte comme paramètre d'entrée, de ladite donnée et/ou dudit évènement transmis par ladite application C.
Il est bien entendu que dans une variante possible du mécanisme précité objet de l'invention, l'action de l'utilisateur sur l'icône 205 représentative de l'application B situé sur l'IHM de la portlet 203_{C} ne sera pas nécessaire. Il est en effet possible d'envisager dans une telle variante que dès lors que l'application C génère une valeur de donnée et/ou d'évènement auxquels l'application B a préalablement souscrite, alors l'application C, via sa portlet 203_{C} transmet automatiquement cette valeur à l'application B, par l'intermédiaire de l'entité 200 de gestion d'application, de façon que l'application B puisse exécuter dynamiquement ladite opération prédéterminée (service, processus, etc.) en tenant compte comme paramètre d'entrée, de ladite donnée et/ou dudit évènement transmis par ladite application C.
Le détail du mécanisme de communication entre applications partageant une même page web est décrit ci-après, en relation avec les figures 3A et 3B.

Dans la suite de la description du scénario décrit à titre d'exemple illustratif au travers les figures 2A à 2C, on décrit maintenant en relation avec la figure 2D comment le contexte des souscriptions entre applications d'une même page 201 web peut être maintenu entre les différentes applications, par ladite entité 200 de gestions d'applications, dès lors qu'une application exécutée dans la page 201 Web est désactivée et/ou déconnectée par un utilisateur.

Comme illustré sur la figure 2D, un utilisateur désactive/ déconnecte l'application A en fermant la fenêtre de la portlet 203_{A} dans la page 201 Web du navigateur 202.
L'entité 200 de gestion d'application en est alors automatiquement notifiée par la portlet 203_{A} (tel que représenté par la flèche F10).
L'entité 200 de gestion d'applications notifie respectivement les portlet 203_{B} et 203_{C} de la déconnexion de la portlet 203_{A} en leur transmettant chacune un message de déconnexion (flèches F11 et F11').
La portlet 203_{C} dans laquelle est exécutée l'application C se met alors à jour de façon dynamique en supprimant l'icône 204 représentatif de l'application A de son IHM.
Dans un mode de réalisation particulier, dit mode simplifié, c'est l'entité 200 de gestion d'application qui supprime directement l'icône 204 dans l'IHM de l'application C.
Pour illustrer les apports de ce mécanisme, considérant un exemple concret ou on trouve les applications annuaire, téléphone, email et de messagerie instantanée (ou "Instant Messaging - IM, en anglais) qui cohabitent dans une même page web d'un navigateur Internet.
Imaginons maintenant qu'un utilisateur charge un contact sur l'annuaire, alors que les applications téléphone, email et IM ont préalablement souscrit à la donnée "contact" produite par l'application annuaire.
Les opérations qu'elles peuvent respectivement déclencher avec pour paramètre d'entrée la donnée "contact" sont par exemple, respectivement : appeler le contact, envoyer un courriel au contact, ouvrir une boîte de dialogue pour initier une communication avec la personne référencée par cette donnée "contact".
Grâce au procédé de communication selon l'invention, durant les étapes de souscription, l'application de téléphonie fournit à l'entité 200 de gestion d'applications une icône représentative d'un appel téléphonique. Les autres applications en feront respectivement de même avec des icônes représentatives, respectivement d'un envoi de courriels et de messagerie instantanée en feront de même.
L'application annuaire va récupérer auprès de l'entité de gestion les informations selon lesquelles les applications de téléphonie, de courrier électronique et de messagerie instantanée ont respectivement souscrites à sa donnée "contact", de sorte que l'application "annuaire" va ajouter sur l'IHM de sa portlet les icônes précités (flèches F3, F5' et F12, F12', dans les figures 2B et 2C), et lors d'un clic sur une de ces icônes, l'application "Annuaire" va publier un évènement unicast qui permettra de déclencher directement l'opération associée à l'icône (appel, ou envoie de email ou initialiser la conversation), auprès de l'application concernée.

Un avantage de ce type de mécanisme est qu'il est plus intuitif qu'un simple "glisser-déposer" pour l'utilisateur. En même temps, ce mécanisme laisse l'utilisateur maître de son espace en évitant de déclencher plusieurs portlets à la fois.

On décrit maintenant en relation avec les figures 3A et 3B le principe de communication entre applications hébergées dans une même page 301 web d'un navigateur 302, par l'intermédiaire d'une entité 300 de gestion d'applications selon l'invention.

Les publications servent concrètement à faire réagir les autres applications d'une même page web, au résultat de l'exécution d'un service par une autre application et par la communication d'au moins un paramètre correspondant à une valeur de donnée et/ou d'évènement produite par cette dernière et devant leur servir de paramètre d'entrée pour l'exécution d'une opération spécifique.

Des applications peuvent publier des paramètres, comme des données et/ou des évènements.

Pour des raisons de sécurité il existe quatre types de publications, à savoir une publication de type "PUBLIC", une publication de type "UNICAST", une publication de type "GROUP", et une publication de type "PRIVATE".

Si une publication par une application est estampillée "PUBLIC" alors toutes les applications qui écoutent le type d'évènements ou données correspondant à cette publication seront en mesure d'y réagir.

Si une publication est estampillée "GROUP", alors, seules les applications appartenant à un même groupe que celle publiant ses données et/ou évènements sera en mesure de réagir.

Par exemple, il sera également possible de sécuriser la communication d'application en conditionnant l'exécution d'une opération d'une première application, à la transmission d'un paramètre (de type donnée ou évènement) dont une valeur aura été générée par une deuxième application appartenant uniquement à un même groupe que ladite première application.

Si une publication est estampillée "PRIVATE", seule il y'a que le module lui-même (qui à généré ce type d'évènements ou données) qui réagira.

Si une publication est estampillée "UNICAST"' alors un évènement généré sera uniquement destiné à une application spécifique hébergée dans la page web.

Dans les quatre cas (PUBLIC, GROUP, PRIVATE, UNICAST), un mapping de type des données/évènements générés avec les type de données/évènements auxquels d'autres application s'y souscrit est fait au niveau de l'entité 200 (étape 102₁)

La figure 3A présente le mécanisme de publication "unicast" (entre deux applications B et C) d'évènements et de données :
- Etape 1 (flèche F30) : un utilisateur charge l'application B qui souscrit aux données de type *dataType.* L'application B fournit pour cela une fonction de call back *callBack* qui peut être une fonction javascript ou bien une URL (cela se passe à l'étape d'initialisation);
- Etape 2 : L'utilisateur click sur l'icône **B** qui se trouve dans la portlet C, la portlet C publie (flèche F31) donc l'événement avec les paramètres Type de publication = UNICAST, Type de données publiées == *dataType,* l'URL ou se trouve ces données = *abc@appC,* Le service destinataire = B (début étape 102).

Dans le cas ou la fonction de call back fournit à l'étape 1 et une fonction javascript :
- Etape 3 : L'entité 300 de gestion achemine (flèche F32) la publication vers la portlet B et lui transmit l'URL qui point vers les donnée transmise par C (*abc@appC*) (suite étape 102).
- Etape 4 : Le module B télécharge (flèche F33) le contenu d'URL.
- Etape 5 et 6 : Le module B se met à jour (flèche F35 et F36) en fonction des données reçues.

Dans le cas ou la fonction de call back fournit à l'étape 1 et une URL voici ci-dessous le schéma correspondant (figure 3B) :
- Etape 3' : L'entité 300 de gestion achemine (flèche F30') la publication vers la portlet B et lui transmit l'URL qui pointe vers les données transmises par C (*abc@appC*) (suite étape 102).
- Etape 4' : Le module B télécharge (flèche F31') le contenu de l'URL.
- Etape 5' et 6' : Le module B se met à jour (flèches F32' et 33') en fonction des données reçues.

Dans le chemin (F30', F31', F32', F33') la portlets B se recharge complètement contrairement au chemin (F32, F33, F35, F36) ou la portlet réagit en exécutant un script seulement dans la couche présentation.

Une sémantique pivot entre les différentes applications est indispensable pour maintenir les modules indépendants les uns des l'autres. Cette sémantique peut être décrite avec des formalismes tel que : micro-format, RDF, OWL, ...

Dans notre réalisation, nous avons utilisée des micro-formats tels que les *hCard* et *hCalendar.* Les micro-formats à la base sont constitués de balise XML prédéfini à insérer dans une page HTML, et les navigateurs actuels sont capable de les interpréter.

Dans le cadre de la présente invention, les balises XML ne sont pas intégrée dans du code HTML mais elles sont stockées directement dans un fichier à part accessible au moyen d'une URL.

A titre d'exemple, une *hCard* est un format de donnée pour représenter des personnes, sociétés, organisations et lieux. Cela permet à une machine d'extraire notamment le nom, prénom, numéro de téléphone, email, adresse... d'une personne, sociétés, et organisations.

L'annexe 1 présente un exemple de *hCard* décrivant la personne "M. Dupont".

Cette représentation commune à toutes les applications hébergées dans une même page web, permet avantageusement une homogénéité dans les échanges des données. Par exemple, une application "téléphone" qui récupère la *hcard* précitée (publiée par exemple par une application "annuaire") sait que cette donnée représente une personne, et qu'elle peut récupérer un numéro de téléphone correspondant (pour l'appeler) au niveau de la balise <*span class="tel"*>.

### ANNEXE 1

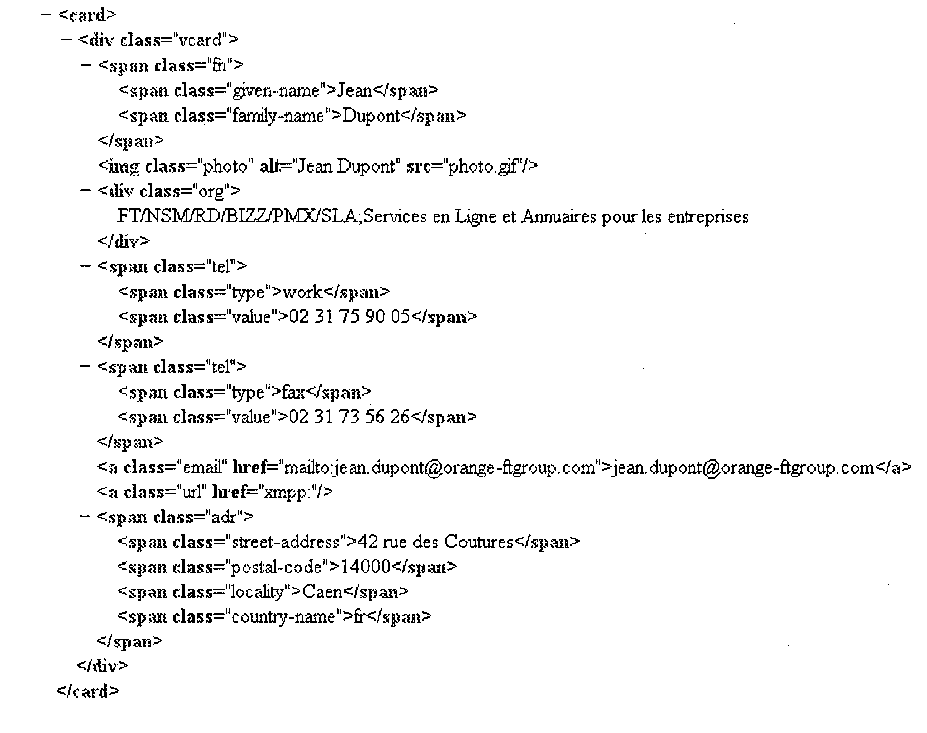

## Revendications

1. Procédé de communication entre une première application et au moins une deuxième application accessibles à l'intérieur d'une page d'un navigateur Internet (201), **caractérisé en ce que** ledit procédé comprend :
■ une étape de transmission préalable par une deuxième application à une entité de gestion d'applications, d'une première liste associant à chaque service proposé par ladite deuxième application, au moins un type de paramètre dont une valeur sera générée à l'exécution du service (101₂),
■ une étape de souscription dynamique de ladite première application à au moins un service de ladite deuxième application, incluant la transmission par ladite première application à ladite entité de gestion d'applications, du type de paramètres susceptibles de servir de paramètres d'entrée pour l'exécution d'au moins une opération susceptible d'être exécutée par ladite première application (101₃),
■ une étape d'exécution par ladite première application, d'au moins une opération tenant compte d'une valeur d'au moins un paramètre, générée par l'exécution dudit au moins un service et transmise par ladite deuxième application à ladite première application (103), incluant la vérification que le type dudit au moins un paramètre d'entrée de ladite opération correspond au type dudit au moins un paramètre dont la valeur a été générée par l'exécution dudit au moins un service (102).

2. Procédé selon la revendication 1, **caractérisé en ce que** ladite étape de souscription comprend les sous-étapes suivantes de :
■ enregistrement de ladite première application auprès de ladite entité de gestion d'applications ;
■ transmission par ladite première application à ladite entité de gestion d'applications, d'une deuxième liste de paramètres associés, respectivement, à au moins une opération susceptible d'être exécutée par ladite première application;
■ création par ladite entité de gestion d'une troisième liste de souscription de service, laquelle associe à chaque service de ladite première liste au moins une opération susceptible d'être exécutée par ladite première application, par mise en correspondance des types de paramètre contenus respectivement dans lesdites premières et deuxièmes listes.

3. Procédé selon la revendication 1, **caractérisé en ce qu'**il comprend une étape de création d'un lien de communication entre lesdites première et deuxième applications, ledit lien étant activé à partir de la deuxième application pour déclencher l'exécution de ladite opération au niveau de ladite première application, suite à l'exécution dudit service par ladite deuxième application.

4. Procédé selon la revendication 3, **caractérisé en ce que** ledit lien est du type appel de fonction à distance tenant compte d'une valeur dudit paramètre générée à l'exécution du service propre de ladite deuxième application.

5. Procédé selon la revendication 3, **caractérisé en ce que** ledit lien est matérialisé par un élément d'une interface homme machine propre à ladite deuxième application au moyen duquel un utilisateur de ladite deuxième application peut interagir pour déclencher l'exécution de ladite opération par l'intermédiaire de ladite première application.

6. Système de communication entre une première application et au moins une deuxième application hébergées dans une même page d'un navigateur Internet (201), **caractérisé en ce qu'**il comprend :
■ des moyens de transmission par une deuxième application, à une entité de gestion d'applications, d'une première liste associant à chaque service proposé par ladite deuxième application, au moins un type de paramètre dont une valeur sera générée à l'exécution du service (101₂);
■ des moyens de souscription dynamique de ladite première application à au moins un service de ladite deuxième application, lesdits moyens des souscription incluant des moyens de transmission par ladite première application à ladite entité de gestion d'applications, du type de paramètres susceptibles de servir de paramètres d'entrée pour l'exécution d'au moins une opération susceptible d'être exécutée par ladite première application (101₃);
■ des moyens d'exécution par ladite première application, d'au moins une opération tenant compte d'une valeur d'au moins un paramètre, générée par l'exécution dudit au moins un service et transmise par ladite deuxième application à ladite première application (103), et de vérification que le type dudit au moins un paramètre d'entrée de ladite opération correspond au type dudit au moins un paramètre dont la valeur a été générée par l'exécution dudit au moins un service (102).

7. Entité de gestion (200) d'au moins une première et deuxième application hébergées chacune dans une même page d'un navigateur Internet (201), pour la mise en oeuvre
procédé de communication selon l'une quelconque des revendications 1 à 5, **caractérisée en ce qu'**elle comprend :
■ des moyens de référencement de chacune desdites première et au moins une deuxième application ;
■ des moyens de stockage d'une première liste associant à chaque service proposé par ladite deuxième application, au moins un type de paramètre dont une valeur sera générée à l'exécution dudit service, ladite première liste étant transmise à ladite entité par ladite deuxième application (101₂);
■ des moyens de stockage d'une deuxième liste de paramètres associés, respectivement, à au moins une opération susceptible d'être exécutée par ladite première application, ladite deuxième liste étant transmise à ladite entité par ladite première application ;
■ des moyens de création d'une troisième liste de souscription de services, laquelle associe à chaque service de ladite première liste au moins une opération susceptible d'être exécutée par ladite première application, lesdits moyens de création étant adaptés pour mettre en correspondance les types de paramètre contenus respectivement dans lesdites première et deuxième listes (101₃).

8. Entité selon la revendication 7, **caractérisée en ce qu'**elle comprend en outre :
■ des moyens de réception d'une valeur d'au moins un paramètre, générée par l'exécution dudit au moins un service par ladite deuxième application; et
■ des moyens de transmission de ladite valeur à ladite première application, pour exécution dynamique de ladite au moins une opération tenant compte de ladite valeur.

9. Produit programme d'ordinateur téléchargeable depuis un réseau de communication et/ou stocké sur un support d'information lisible par un ordinateur et/ou exécutable par un microprocesseur, **caractérisé en ce qu'**il comprend des instructions de code pour la mise en oeuvre d'un procédé de communication conforme à l'une quelconque des revendications 1 à 5, lorsque lesdites instructions sont exécutées sur un ordinateur.

## Patentansprüche

1. Verfahren zur Kommunikation zwischen einer ersten Anwendung und mindestens einer zweiten Anwendung, die auf einer Seite eines Internet-Browsers (201) zugänglich sind, **dadurch gekennzeichnet, dass** das Verfahren Folgendes umfasst:
- einen Schritt des vorherigen Übertragens durch eine zweite Anwendung an eine Anwendungsverwaltungsinstanz einer ersten Liste, die mit jedem Dienst, der von der zweiten Anwendung angeboten wird, mindestens einen Parametertyp verknüpft, von dem ein Wert bei der Ausführung des Dienstes (101₂) generiert wird;
- einen Schritt des dynamischen Abonnierens der ersten Anwendung bei mindestens einem Dienst der zweiten Anwendung, umfassend das Übertragen durch die erste Anwendung an die Anwendungsverwaltungsinstanz des Typs der Parameter, die als Eingangsparameter für die Ausführung mindestens eines Vorgangs, der von der ersten Anwendung (101₃) ausgeführt werden kann, dienen können;
- einen Schritt des Ausführens durch die erste Anwendung mindestens eines Vorgangs, der einen Wert mindestens eines Parameters berücksichtigt, der durch die Ausführung des mindestens einen Dienstes generiert wird und durch die zweite Anwendung an die erste Anwendung (103) übertragen wird, umfassend das Überprüfen, dass der Typ des mindestens einen Eingangsparameters des Vorgangs dem Typ des mindestens eines Parameters entspricht, dessen Wert durch die Ausführung des mindestens einen Dienstes (102) generiert wurde.

2. Verfahren nach Anspruch 1, **dadurch gekennzeichnet, dass** der Schritt des Abonnierens die folgenden Unterschritte umfasst:
- Registrieren der ersten Anwendung bei der Anwendungsverwaltungsinstanz;
- Übertragen durch die erste Anwendung an die Anwendungsverwaltungsinstanz einer zweiten Liste mit Parametern, die jeweils mit mindestens einem Vorgang verknüpft sind, der von der ersten Anwendung ausgeführt werden kann;
- Erstellen durch die Verwaltungsinstanz einer dritten Liste zum Abonnieren von Diensten, die mit jedem Dienst der ersten Liste mindestens einen Vorgang verknüpft, der von der ersten Anwendung ausgeführt werden kann, indem sie die Parametertypen, die jeweils in den ersten und zweiten Listen enthalten sind, abgleicht.

3. Verfahren nach Anspruch 1, **dadurch gekennzeichnet, dass** es einen Schritt des Erstellens eines Kommunikations-Links zwischen den ersten und zweiten Anwendungen umfasst, wobei der Link von der zweiten Anwendung aus aktiviert wird, um die Ausführung des Vorgangs an der ersten Anwendung im Anschluss an die Ausführung des Dienstes durch die zweite Anwendung auszulösen.

4. Verfahren nach Anspruch 3, **dadurch gekennzeichnet, dass** der Link vom Typ eines Fernfunktionsaufrufs ist, der einen Wert des Parameters berücksichtigt, der bei der Ausführung des Dienstes, welcher der zweiten Anwendung eigen ist, generiert wird.

5. Verfahren nach Anspruch 3, **dadurch gekennzeichnet, dass** der Link durch ein Element einer Mensch-Maschine-Schnittstelle, die der zweiten Anwendung eigen ist, ausgebildet ist und anhand dessen ein Benutzer der zweiten Anwendung interagieren kann, um die Ausführung des Vorgangs über die erste Anwendung auszulösen.

6. System zur Kommunikation zwischen einer ersten Anwendung und mindestens einer zweiten Anwendung, die auf ein und derselben Seite eines Internet-Browsers (201) gehostet sind, **dadurch gekennzeichnet, dass** es Folgendes umfasst:
- Mittel zum Übertragen durch eine zweite Anwendung an eine Anwendungsverwaltungsinstanz einer ersten Liste, die mit jedem Dienst, der von der zweiten Anwendung angeboten wird, mindestens einen Parametertyp verknüpft, von dem ein Wert bei der Ausführung des Dienstes (101₂) generiert wird;
- Mittel zum dynamischen Abonnieren der ersten Anwendung bei mindestens einem Dienst der zweiten Anwendung, wobei die Mittel zum Abonnieren Mittel zum Übertragen durch die erste Anwendung an die Anwendungsverwaltungsinstanz des Typs der Parameter, die als Eingangsparameter für die Ausführung mindestens eines Vorgangs, der von der ersten Anwendung (101₃) ausgeführt werden kann, dienen können, umfassen;
- Mittel zum Ausführen durch die erste Anwendung mindestens eines Vorgangs, der einen Wert mindestens eines Parameters berücksichtigt, der durch die Ausführung des mindestens einen Dienstes generiert wird und durch die zweite Anwendung an die erste Anwendung (103) übertragen wird, und zum Überprüfen, dass der Typ des mindestens einen Eingangsparameters des Vorgangs dem Typ des mindestens eines Parameters entspricht, dessen Wert durch die Ausführung des mindestens einen Dienstes (102) generiert wurde.

7. Instanz (200) zum Verwalten mindestens einer ersten und einer zweiten Anwendung, die jeweils auf ein und derselben Seite eines Internet-Browsers (201) gehostet sind, zum Umsetzen eines Kommunikationsverfahrens nach einem der Ansprüche 1 bis 5, **dadurch gekennzeichnet, dass** sie Folgendes umfasst:
- Mittel zum Referenzieren jeder der ersten und mindestens einer zweiten Anwendung;
- Mittel zum Speichern einer ersten Liste, die mit jedem Dienst, der von der zweiten Anwendung angeboten wird, mindestens einen Parametertyp verknüpft, von dem ein Wert bei der Ausführung des Dienstes generiert wird, wobei die erste Liste von der zweiten Anwendung (101₂) an die Instanz übertragen wird;
- Mittel zum Speichern einer zweiten Liste von Parametern, die jeweils mit mindestens einem Vorgang verknüpft sind, der von der ersten Anwendung ausgeführt werden kann, wobei die zweite Liste von der ersten Anwendung an die Instanz übertragen wird;
- Mittel zum Erstellen einer dritten Liste zum Abonnieren von Diensten, die mit jedem Dienst der ersten Liste mindestens einen Vorgang verknüpft, der von der ersten Anwendung ausgeführt werden kann, wobei die Erstellungsmittel geeignet sind, um die Parametertypen, die jeweils in den ersten und zweiten Listen (101₃) enthalten sind, abzugleichen.

8. Instanz nach Anspruch 7, **dadurch gekennzeichnet, dass** sie ferner Folgendes umfasst:
- Mittel zum Empfangen eines Wertes mindestens eines Parameters, der durch die Ausführung des mindestens einen Dienstes durch die zweite Anwendung generiert wird; und
- Mittel zum Übertragen des Wertes an die erste Anwendung zur dynamischen Ausführung des mindestens einen Vorgangs, der den Wert berücksichtigt.

9. Computerprogrammprodukt, das aus einem Kommunikationsnetz herunterladbar ist und/oder auf einem Datenträger, der durch einen Computer lesbar ist, gespeichert ist, und/oder durch einen Mikroprozessor ausführbar ist, **dadurch gekennzeichnet, dass** es Code-Anweisungen für die Umsetzung eines Kommunikationsverfahrens gemäß einem der Ansprüche 1 bis 5 umfasst, wenn die Anweisungen auf einem Computer ausgeführt werden.

## Claims

1. Method for communication between a first application and at least one second application which are accessible within a page of an Internet browser (201), **characterized in that** said method comprises:
• a step of prior transmission by a second application to an applications management entity, of a first list associating with each service offered by said second application, at least one type of parameter, a value of which will be generated upon the execution of the service (101₂);
• a step of dynamic subscription of said first application to at least one service of said second application, including the transmission by said first application to said applications management entity, of the type of parameters that are liable to serve as input parameters for the execution of at least one operation liable to be executed by said first application (101₃);
• a step of execution by said first application, of at least one operation taking account of a value of at least one parameter, said value being generated by the execution of said at least one service and transmitted by said second application to said first application (103), including the verification that the type of said at least one input parameter of said operation corresponds to the type of said at least one parameter whose value has been generated by the execution of said at least one service (102).

2. Method according to Claim 1, **characterized in that** said step of subscription comprises the following substeps of:
• registration of said first application with said applications management entity;
• transmission by said first application to said applications management entity, of a second list of parameters associated, respectively, with at least one operation liable to be executed by said first application;
• creation by said management entity of a third service subscription list, which associates with each service of said first list at least one operation liable to be executed by said first application, by cross-matching the types of parameters contained respectively in said first and second lists.

3. Method according to Claim 1, **characterized in that** it comprises a step of creating a communication link between said first and second applications, said link being activated on the basis of the second application so as to trigger the execution of said operation at the level of said first application, subsequent to the execution of said service by said second application.

4. Method according to Claim 3, **characterized in that** said link is of the remote function call type taking account of a value of said parameter, said value being generated upon the execution of the inherent service of said second application.

5. Method according to Claim 3, **characterized in that** said link is embodied by an element of a man machine interface inherent to said second application and by means of which a user of said second application can interact so as to trigger the execution of said operation by way of said first application.

6. System for communication between a first application and at least one second application which are hosted in one and the same page of an Internet browser (201), **characterized in that** it comprises:
• means of transmission by a second application, to an applications management entity, of a first list associating with each service offered by said second application, at least one type of parameter, a value of which will be generated upon the execution of the service (101₂);
• means of dynamic subscription of said first application to at least one service of said second application, said means of subscription including means of transmission by said first application to said applications management entity, of the type of parameters that are liable to serve as input parameters for the execution of at least one operation liable to be executed by said first application (101₃);
• means of execution by said first application, of at least one operation taking account of a value of at least one parameter, said value being generated by the execution of said at least one service and transmitted by said second application to said first application (103), and of verification that the type of said at least one input parameter of said operation corresponds to the type of said at least one parameter whose value has been generated by the execution of said at least one service (102).

7. Management entity (200) for managing at least one first and second application each hosted in one and the same page of an Internet browser (201) for the implementation of a communication method according to any of Claims 1 to 5, **characterized in that** it comprises:
• means of referencing of each of said first and at least one second application;
• means of storage of a first list associating with each service offered by said second application, at least one type of parameter, a value of which will be generated upon the execution of said service, said first list being transmitted to said entity by said second application (101₂);
• means of storage of a second list of parameters associated, respectively, with at least one operation liable to be executed by said first application, said second list being transmitted to said entity by said first application;
• means of creation of a third services subscription list, which associates with each service of said first list at least one operation liable to be executed by said first application, said means of creation being adapted for cross-matching the types of parameters contained respectively in said first and second lists (101₃).

8. Entity according to Claim 7, **characterized in that** it furthermore comprises:
• means of receiving a value of at least one parameter, said value being generated by the execution of said at least one service by said second application; and
• means of transmitting said value to said first application, for dynamic execution of said at least one operation taking account of said value.

9. Computer program product downloadable from a communication network and/or stored on an information medium readable by a computer and/or executable by a microprocessor, **characterized in that** it comprises code instructions for the implementation of a communication method in accordance with any one of Claims 1 to 5, when said instructions are executed on a computer.
